# EUROPÄISCHE PATENTSCHRIFT

(11) **EP 1 344 603 B1**
(45) Veröffentlichungstag und Bekanntmachung des Hinweises auf die Patenterteilung: **06.07.2005**
(21) Anmeldenummer: 02005488.8
(22) Anmeldetag: 09.03.2002
(51) Int. Cl.: B23Q 5/38, F16H 55/26

(54) **Bewegungseinheit an Werkzeugmaschinen sowie Werkzeugmaschine mit einer derartigen Bewegungseinheit**
Motion unit of a machine tool and machine tool with such a motion unit
Unité de déplacement d'une machine-outil et une machine-outil avec cette unité de déplacement

(43) Veröffentlichungstag der Anmeldung: 17.09.2003
(73) Patentinhaber: TRUMPF Werkzeugmaschinen GmbH + Co. KG, 71254 Ditzingen (DE)
(72) Erfinder: Schmidt, Christoph, 70195 Stuttgart (DE)
(74) Vertreter: Kohler Schmid Möbus

(56) Entgegenhaltungen:
- EP-A- 0 733 425
- WO-A-99/12786
- DE-A- 2 805 532
- DE-U- 20 101 388
- US-A- 4 054 179

## Beschreibung

Die Erfindung betrifft eine Bewegungseinheit an Werkzeugmaschinen, mit wenigstens einem Antrieb sowie zumindest einer dem Antrieb zugeordneten Bewegungsführung, wobei der Antrieb zumindest eine Zahnstange sowie zumindest ein damit kämmendes Antriebsritzel und die Bewegungsführung zumindest eine Tragstruktur sowie eine Mehrzahl von Führungseinheiten umfasst, die an der Tragstruktur geführt und mittels des Antriebes gemeinschaftlich bewegbar sind. Die Erfindung betrifft des Weiteren eine Werkzeugmaschine mit einer derartigen Bewegungseinheit.

Gattungsbildender Stand der Technik ist die aus praktischer Anschauung vorbekannte Maschine des Typs "TC 5000 R", die von der Firma "TRUMPF", 71254 Ditzingen (Deutschland) angeboten wird und die in dem von der Firma "TRUMPF" verteilten, nachveröffentlichten Prospekt mit dem Titel "TRUMATIC 5000 ROTATION" beschrieben ist. Die vorbekannte Maschine verfügt über eine Bewegungseinheit in Form einer Koordinatenführung. Mittels der Koordinatenführung werden gegenüber einer Stanzstation der Maschine Bleche zur Bearbeitung und Bearbeitungswerkzeuge zum Ein- und Auswechseln bewegt bzw. positioniert. Die Werkstück- sowie die Werkzeugbewegung erfolgt dabei in einer horizontalen Ebene, die durch x- und y-Koordinatenachsen definiert ist. Für jede dieser Achsrichtungen ist eine eigene Bewegungsführung vorgesehen. In Richtung der x-Achse sind Führungseinheiten mit Spannpratzen für die zu bearbeitenden Bleche sowie mit Kassetten zur Aufnahme von Bearbeitungswerkzeugen an einer Tragschiene bewegbar geführt. In Richtung der y-Achse kann die Bewegungsführung für die x-Richtung an dem Maschinengestell verfahren werden. Zu diesem Zweck vorgesehen sind Führungseinheiten, die mit der Bewegungsführung für die x-Achse verbunden sind sowie Tragschienen des Maschinengestells, die dort in y-Richtung verlaufen und entlang derer sich die Führungseinheiten für die y-Richtung bewegen. Zum Antrieb der Führungseinheiten für die x-Richtung sowie zum Antrieb der Führungseinheiten für die y-Richtung dient jeweils ein Zahnstangenantrieb mit einem ortsfesten Antriebsritzel sowie mit einer an den betreffenden Führungseinheiten angebrachten und mit den Führungseinheiten gemeinschaftlich bewegten Zahnstange.

Den Stand der Technik konstruktiv zu vereinfachen, hat sich die vorliegende Erfindung zum Ziel gesetzt.

Erfindungsgemäß gelöst wird diese Aufgabe durch eine Bewegungseinheit gemäß Patentanspruch 1 sowie durch eine Werkzeugmaschine gemäß Patentanspruch 11.

Im Sinne der Erfindung sind die Führungseinheiten nicht nur Teil der betreffenden Bewegungsführung sondern darüber hinaus auch des für diese vorgesehenen Antriebes. In der Folge verringert sich die Anzahl der zur Bewegung der Führungseinheiten benötigten Bauteile. Die Gesamtanordnung wird dadurch kompakt, ihre Eigenmasse bzw. ihr Eigengewicht reduziert sich auf ein Minimum. Infolge der unmittelbaren Beaufschlagung der Führungseinheiten durch das oder die zugeordneten Antriebsritzel ergibt sich ein ausgesprochen kurzer und hinsichtlich der auftretenden Belastungen einfach optimierbarer Weg für den Fluss der in die Führungseinheiten einzuleitenden Antriebskraft. Alles in allem lassen sich mit der erfindungsgemäßen Bewegungseinheit sowie mit der erfindungsgemäßen Werkzeugmaschine Bewegungen mit hoher Geschwindigkeit bei gleichzeitig hoher Genauigkeit realisieren.

Besondere Ausführungsarten der Erfindung ergeben sich aus den abhängigen Patentansprüchen 2 bis 10.

Patentanspruch 2 beschreibt eine Erfindungsbauart, die sich durch eine besonders einfache konstruktive Gestaltung sowie durch eine besonders wirksame Übertragung der Antriebskraft auf die Führungseinheiten auszeichnet. Die Verzahnungsabschnitte der Zahnstange bilden dabei vollständig integrale Bestandteile der betreffenden Führungseinheiten.

Die Patentansprüche 3, 4, 5 und 6 betreffen erfindungsgemäß bevorzugte Möglichkeiten zur gegenseitigen Justage der mit Verzahnungsabschnitten der Zahnstange versehenen Führungseinheiten und somit der Verzahnungsabschnitte selbst. Mittels des Zugankers nach Patentanspruch 3 und auch mittels der Verbindungsleiste nach Patentanspruch 4 und der Überlappung nach Patentanspruch 5 können die betreffenden Führungseinheiten sowohl in ihrer Bewegungsrichtung als auch quer dazu definiert gegeneinander fixiert werden. Im Falle der Erfindungsbauart gemäß Patentanspruch 6 wird die gegenseitige Justage der Führungseinheiten quer zu deren Bewegungsrichtung von der Tragstruktur übernommen. Zusätzlicher Justagemittel bedarf es somit nur noch zur gegenseitigen Ausrichtung und Fixierung der Führungseinheiten in Bewegungsrichtung.

Durch besonders günstige Verhältnisse bei der Übertragung der Antriebskraft zeichnet sich die in Patentanspruch 7 beschriebene Ausführungsform der erfindungsgemäßen Bewegungseinheit aus. Quer zu der Bewegungsrichtung der Führungseinheiten wirksame Komponenten der Antriebskraft können unter Vermeidung von auf die Führungseinheiten ausgeübten Kippmomenten in die zugeordnete Tragstruktur abgeleitet werden.

Der Einsatz gleichartiger Führungseinheiten, wie er ausweislich Patentanspruch 8 in Weiterbildung der Erfindung vorgesehen ist, erlaubt es, einzelne Führungseinheiten beliebig miteinander zu kombinieren. Werden derartige Führungseinheiten vorgehalten, so lässt sich beispielsweise ein beschädigungsbedingter Austausch einer Führungseinheit gegen eine andere Führungseinheit mit minimalem Aufwand vornehmen. Führungseinheiten mit weiteren Funktionseinrichtungen, beispielsweise mit Haltevorrichturigen für Werkstücke oder mit Haltevorrichtungen für Bearbeitungswerkzeuge, können innerhalb einer Reihe von Führungseinheiten beliebig umgesetzt werden, ohne dass dadurch das funktionssichere Zusammenwirken der Verzahnungsabschnitte an den einzelnen Führungseinheiten beeinträchtigt würde.

Den Patentansprüchen 9 und 10 zu entnehmen sind Ausführungsformen der erfindungsgemäßen Bewegungseinheit, die zur Bewegung von Werkstücken und/oder von Bearbeitungswerkzeugen gegenüber Bearbeitungsstationen von Werkzeugmaschinen dienen. Sind mehrachsige Bewegungen auszuführen, wie dies etwa bei der Koordinatenführung nach Patentanspruch 10 der Fall ist und werden für jede Bewegungsachse erfindungsgemäße Führungswagen mit zumindest teilweise integrierten Verzahnungsabschnitten verwendet, so ergibt sich eine Akkumulation der erfindungsgemäßen Vorteile.

Nachstehend wird die Erfindung anhand beispielhafter schematischer Darstellungen näher erläutert. Es zeigen:
- Fig. 1: eine stark schematisierte Teildarstellung einer Werkzeugmaschine mit einer Bewegungseinheit mit x-Führung sowie mit y-Führung,

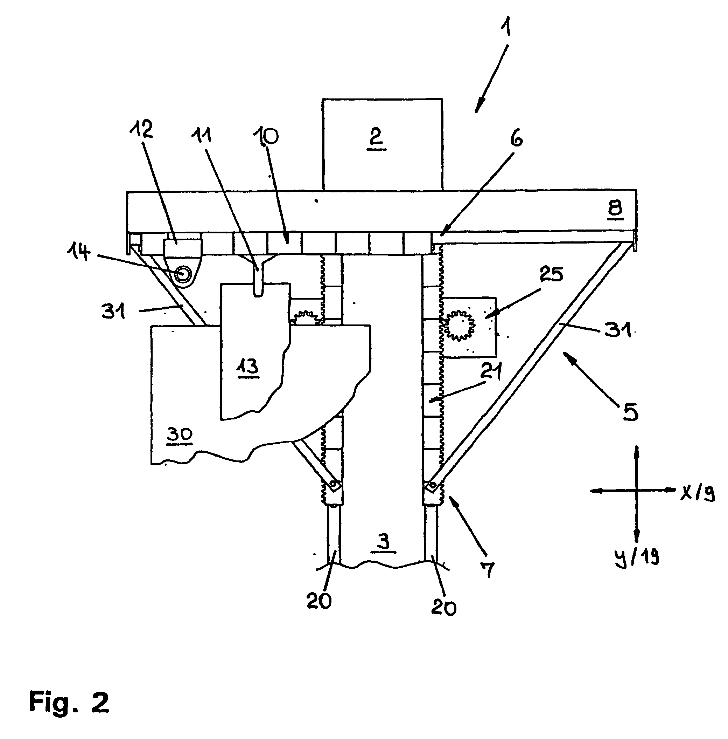

- Fig. 2: die Werkzeugmaschine nach Fig. 1 in der Draufsicht auf die Bewegungseinheit,
- Fign. 3 und 4: teilgeschnittene Darstellungen zu der x-Führung nach den Fign. 1 und 2,
- Fig. 5: eine teilgeschnittene Darstellung zu der y-Führung nach den Fign. 1 und 2,
- Fign. 6 und 7: Darstellungen entsprechend den Fign. 3 und 4 zu einer zweiten Bauart der x-Führung,
- Fig. 8: eine Darstellung entsprechend Fig. 5 zu einer zweiten Bauart der y-Führung,
- Fig. 9: die y-Führung nach Fig. 8 in der Draufsicht,
- Fig. 10: eine Darstellung entsprechend den Fign. 5 und 8 zu einer dritten Bauart der y-Führung,
- Fig. 11: eine Darstellung entsprechend den Fign. 5, 8 und 10 zu einer vierten Bauart der y-Führung und
- Fign. 12 u. 13: Darstellungen entsprechend den Fign. 8 und 9 zu einer fünften Bauart der y-Führung.

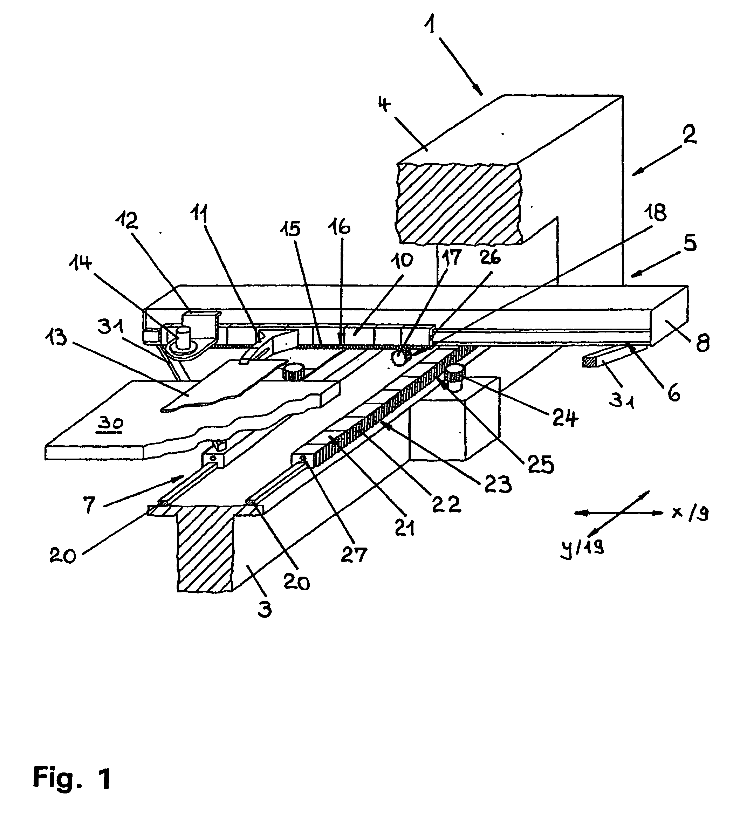

Ausweislich Fig. 1 besitzt eine Werkzeugmaschine in Form einer Stanzmaschine 1 ein C-förmiges Maschinengestell 2 mit einem unteren Gestellschenkel 3 sowie einem oberen Gestellschenkel 4. Beide Gestellschenkel 3, 4 sind in Fig. 1 abgebrochen dargestellt.

An den freien Enden der Gestellschenkel 3, 4 ist die nicht im Einzelnen gezeigte Bearbeitungs-, d.h. Stanzstation, der Stanzmaschine 1 vorgesehen. Diese Stanzstation ist herkömmlicher Bauart und umfasst eine an dem unteren Gestellschenkel 3 angeordnete Werkzeugaufnahme für das Stanz-Unterwerkzeug sowie eine an dem oberen Gestellschenkel 4 vorgesehene Werkzeugaufnahme für das Stanz-Oberwerkzeug.

In dem Rachen der Stanzmaschine 1 ist zwischen dem unteren Gestellschenkel 3 und dem oberen Gestellschenkel 4 eine Bewegungseinheit in Form einer Koordinatenführung 5 untergebracht. Diese umfasst eine erste Bewegungsführung in Form einer x-Führung 6 sowie eine zweite Bewegungsführung in Form einer y-Führung 7.

Die x-Führung 6 weist als Tragstruktur eine x-Schiene 8 auf, die sich in Richtung einer ersten Bewegungsachse, nämlich der x-Achse 9, erstreckt. In Richtung der x-Achse 9 ist an der x-Schiene 8 eine Mehrzahl von als Führungswagen 10 ausgebildeten Führungseinheiten angetrieben bewegbar geführt. An einzelnen Führungswagen 10 sind Pratzen 11, an anderen Werkzeugkassetten 12 angebracht. Die Pratzen 11 dienen in herkömmlicher Weise zur Halterung eines Werkstücks in Form eines Blechs 13; die Werkzeugkassetten 12 lagern jeweils ein als Stanzwerkzeug 14 ausgebildetes mehrteiliges Bearbeitungswerkzeug. An der nach unten weisenden Seite sind die Führungswagen 10 mit an ihre Wandung angeformten, im gezeigten Beispielsfall eingeschnittenen Verzahnungsabschnitten 15 versehen.

Die Verzahnungsabschnitte 15 an den in Richtung der x-Achse 9 aufeinander folgenden Führungswagen 10 schließen sich in der genannten Richtung aneinander an und bilden auf diese Weise eine versatzfreie Zahnstange 16. Mit der Zahnstange 16 kämmt ein Antriebsritzel 17, das auf der Welle eines an der x-Schiene 8 gelagerten Antriebsmotors aufsitzt. Das Antriebsritzel 17 sowie die Zahnstange 16 bzw. die Verzahnungsabschnitte 15 sind Teile eines Antriebes in Form eines x-Antriebes 18, mittels dessen die Führungswagen 10 in Richtung der x-Achse 9 an der x-Schiene 8 entlang bewegt werden können.

In Richtung der x-Achse 9 ist die x-Schiene 8 ortsunveränderlich. In Richtung einer zweiten Bewegungsachse, nämlich der y-Achse 19, kann die x-Schiene 8 mittels der y-Führung 7 verfahren werden. Als Tragstruktur der y-Führung 7 fungiert der untere Gestellschenkel 3 mit an seiner Oberseite angebrachten Führungsschienen 20. An dem unteren Gestellschenkel 3 bzw. an dessen Führungsschienen 20 entlang bewegbar sind Führungseinheiten in Form von Führungswagen 21. Ein Teil der Führungswagen 21 lagert die x-Schiene 8. Sämtliche Führungswagen 21 sind an einer Außenwand mit Verzahnungsabschnitten 22 versehen, die ebenso wie die Verzahnungsabschnitte 15 an dem Führungswagen 10 in die betreffende Wagenaußenwand eingeschnitten sind. Die Verzahnungsabschnitte 22 bilden eine versatzfreie Zahnstange 23. Mit dieser kämmt ein Antriebsritzel 24, das auf der Welle eines stationären Antriebsmotors angebracht ist. Die genannten Komponenten bilden einen Antrieb in Form eines y-Antriebes 25, mittels dessen die x-Schiene 8 in Richtung der y-Achse 19 verfahren werden kann.

Wie in den Fign. 1 und 3 bis 5 angedeutet, sind die Führungswagen 10 der x-Führung 6 über einen Zuganker 26, die Führungswagen 21 der y-Führung 7 über einen Zuganker 27 miteinander verbunden. Der Zuganker 26 verläuft dabei in Richtung der x-Achse 9, der Zuganker 27 in Richtung der y-Achse 19. Die Zuganker 26, 27 sorgen dafür, dass die Verzahnungsabschnitte 15, 22 in der jeweiligen Bewegungsrichtung zusammenhängende und insofern versatzfreie Zahnstangen 16, 23 bilden. Bei Bedarf können zwischen einzelne Führungswagen 10, 21 zur Schaffung einer gleichförmigen Verzahnung Distanzstücke eingelegt werden. Einen Beitrag zur gegenseitigen Justage der einzelnen Führungswagen 10 bzw. der einzelnen Führungswagen 21 leistet außerdem deren jeweilige Lagerung an der x-Schiene 8 bzw. an dem unteren Gestellschenkel 3. Diese Lagerung ist quer zu der Bewegungsrichtung der Führungswagen 10, 21, also quer zu der x-Achse 9 bzw. der y-Achse 19 im Wesentlichen spielfrei. Schon mit dem Aufschieben der Führungswagen 10, 21 auf die jeweilige Tragstruktur ergibt sich somit eine gegenseitige Justage der Führungswagen 10, 21 und dadurch eine Versatzfreiheit der von den Verzahnungsabschnitten 15, 22 gebildeten Zahnstangen 16, 23 quer zu der x-Achse 9 bzw. der y-Achse 19.

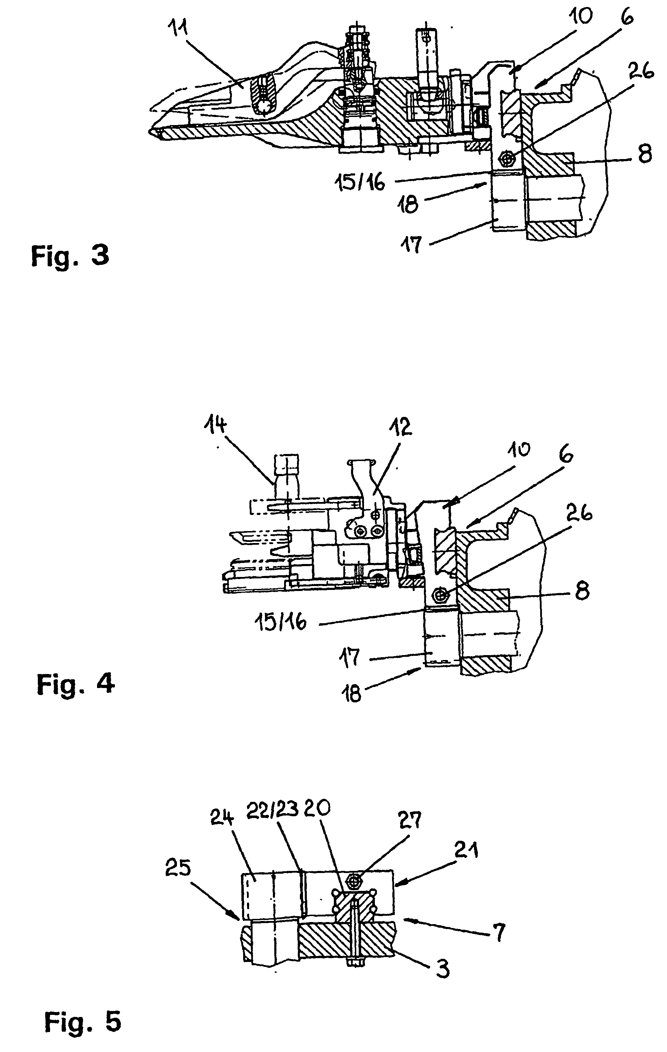

Wie im Einzelnen den Fign. 3, 4 und 5 zu entnehmen ist, sind die Verzahnungsabschnitte 15, 22 an derjenigen Außenseite der Führungswagen 10, 21 vorgesehen, welche der Abstützung der Führungswagen 10, 21 an der zugeordneten x-Schiene 8 bzw. der zugeordneten Führungsschiene 20 des unteren Gestellschenkels 3 gegenüberliegt. Die Antriebskraft zur Bewegung der Führungswagen 10, 21 wird dementsprechend der Lagerung der Führungswagen 10, 21 unmittelbar gegenüberliegend eingeleitet.

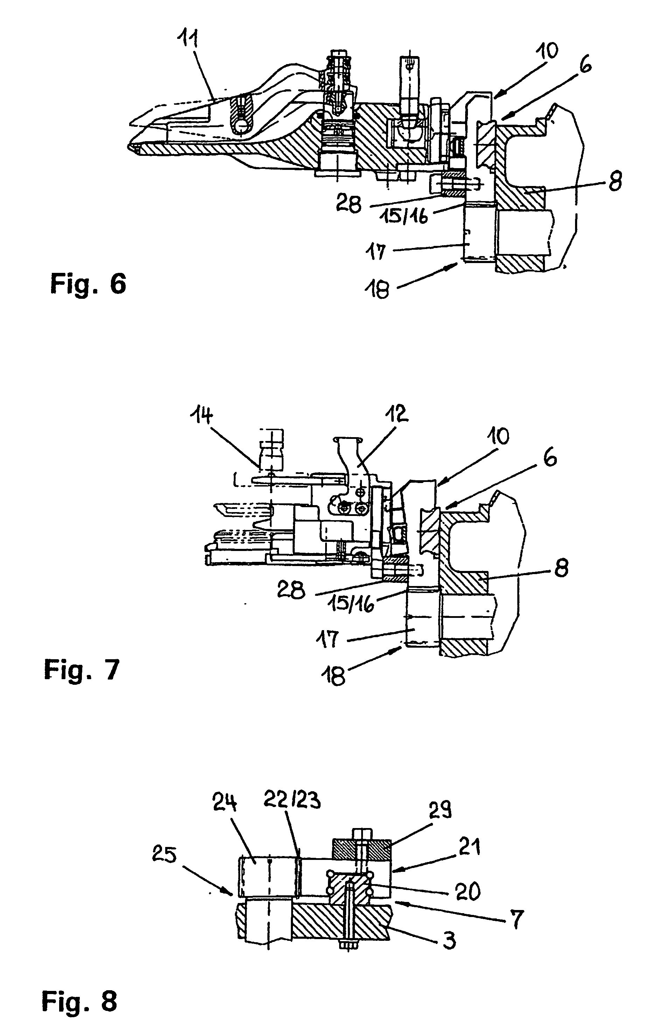

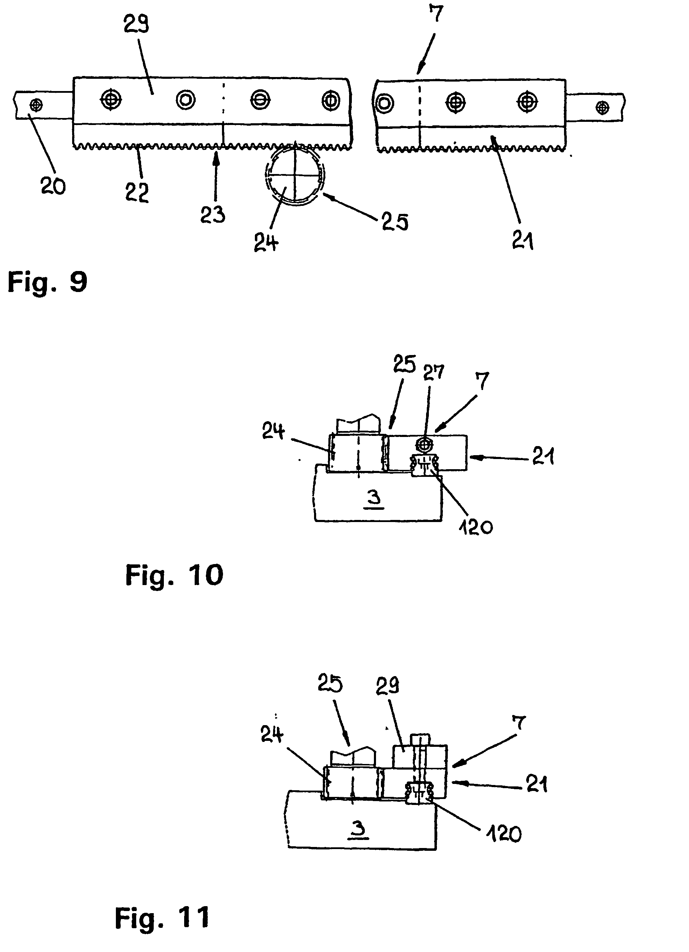

Ausweislich der Fign. 6 und 7 kann zur Verbindung der Führungswagen 10 und damit zur Bildung einer zusammenhängenden und versatzfreien Zahnstange 16 aus den Verzahnungsabschnitten 15 anstelle des Zugankers 26 eine Verbindungsleiste 28 vorgesehen sein. Die Verbindungsleiste 28 ist dabei mit den Führungswagen 10 außen aufliegend verschraubt. Entsprechend kann gemäß den Fign. 9 und 10 eine Verbindungsleiste 29 den zuvor beschriebenen Zuganker 27 zur Kopplung der Führungswagen 21 der y-Führung 7 ersetzen.

Gegenüber den Verhältnissen nach den Fign. 5 und 8 abgewandelte Bauarten der y-Führung 7 sind aus den Fign. 10 bis 13 ersichtlich. Das Antriebsritzel 24 ist dabei an dem nach unten weisenden Ende einer Motorwelle angebracht. Gegenüber den Verhältnissen nach den Fign. 5 und 8 ebenfalls abgewandelt ist die Querschnittsform von Führungsschienen 120 des unteren Gestellschenkels 3, welche die Führungswagen 21 bzw. Führungswagen 221 der y-Führung 7 an konkaven Seitenwänden lagern.

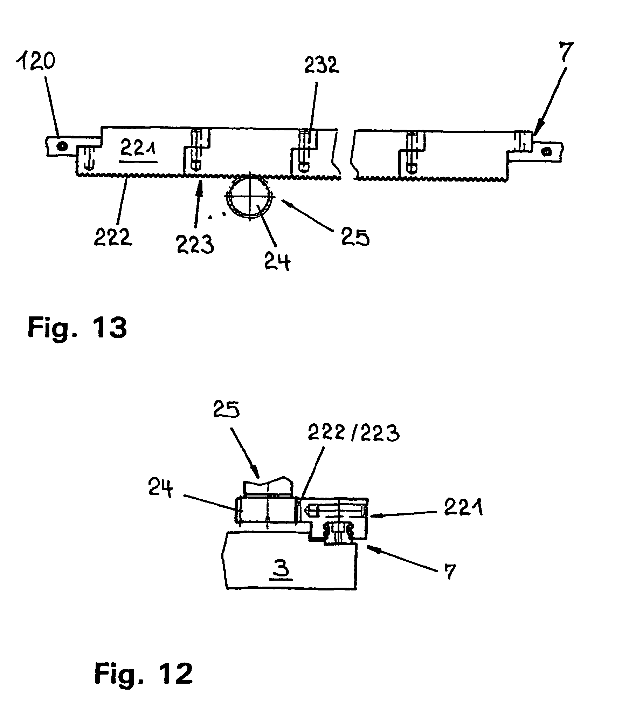

Gemäß den Fign. 12 und 13 sind die Führungswagen 221 der y-Führung 7 gegenüber den vorstehend beschriebenen Führungswagen 21 konstruktiv abgewandelt. Im Einzelnen sind die Führungswagen 221 in Richtung der y-Achse 19 mit Passungen 232 überlappend miteinander verschraubt. Dadurch ist dafür gesorgt, dass in die Führungswagen 221 eingeschnittene Verzahnungsabschnitte 222 eine versatzfreie, zusammenhängende Zahnstange 223 bilden. Ausweislich Fig. 12 sind die Verzahnungsabschnitte 222 an seitlichen Vorsprüngen der Führungswagen 221 vorgesehen. Die Führungswagen der x-Führung 6 können konstruktiv entsprechend gestaltet sein. Generell besteht die Möglichkeit, die verschiedenen Bauarten der x-Führung 6 bzw. der y-Führung 7 beliebig miteinander zu kombinieren.

Bei Betrieb der Stanzmaschine 1, der wie üblich numerisch gesteuert ist, werden das Blech 13 sowie die Stanzwerkzeuge 14 mittels der Koordinatenführung 5 in der durch die x-Achse 9 sowie die y-Achse 19 definierten Ebene gegenüber der nicht gezeigten Bearbeitungsstation bewegt bzw. positioniert. Die an der x-Schiene 8 gehaltenen Stanzwerkzeuge 14 lassen sich dabei in die Werkzeugaufnahmen an der Stanzstation einsetzen bzw. aus den Werkzeugaufnahmen entnehmen. Eine detaillierte Beschreibung dieser an sich bekannten Abläufe findet sich in DE-A-38 18 001. Das Blech 13 gleitet bei seiner Bewegung in Richtung der x-Achse 9 auf einem Werkstücktisch 30, der an Führungswagen 21, 221 der y-Führung 7 gelagert ist und in Richtung der y-Achse 19 verfahren wird. Streben 31 sorgen für eine Versteifung der Koordinatenführung 5.

## Patentansprüche

1. Bewegungseinheit an Werkzeugmaschinen, mit wenigstens einem Antrieb (18, 25) sowie zumindest einer dem Antrieb (18, 25) zugeordneten Bewegungsführung (6, 7), wobei der Antrieb (18, 25) zumindest eine Zahnstange (16, 23, 223) sowie zumindest ein damit kämmendes Antriebsritzel (17, 24) und die Bewegungsführung (6, 7) zumindest eine Tragstruktur (8, 3) sowie eine Mehrzahl von Führungseinheiten (10, 21, 221) umfasst, die an der Tragstruktur (8, 3) geführt und mittels des Antriebes (18, 25) gemeinschaftlich bewegbar sind, **dadurch gekennzeichnet, dass** die Zahnstange (16, 23, 223) Verzahnungsabschnitte (15, 22, 222) umfasst, von denen wenigstens ein Teil an zumindest einem Teil der Führungseinheiten (10, 21, 221) mit diesen einstückig ausgebildet ist und dass die betreffenden Führungseinheiten (10, 21, 221) zur Bildung der Zahnstange (16, 23, 223) relativ zueinander justiert gehalten sind.

2. Bewegungseinheit nach Anspruch 1, **dadurch gekennzeichnet, dass** die Verzahnungsabschnitte (15, 22, 222) an den betreffenden Führungseinheiten (10, 21, 221) vollständig angeformt sind.

3. Bewegungseinheit nach einem der vorhergehenden Ansprüche, **dadurch gekennzeichnet, dass** die betreffenden Führungseinheiten (10, 21) mittels wenigstens eines sie in ihrer Bewegungsrichtung (9, 19) durchsetzenden Zugankers (26, 27) relativ zueinander justiert gehalten sind.

4. Bewegungseinheit nach einem der vorhergehenden Ansprüche, **dadurch gekennzeichnet, dass** die betreffenden Führungseinheiten (10, 21) mittels wenigstens einer an ihnen außen aufliegend angebrachten Verbindungsleiste (28, 29) relativ zueinander justiert gehalten sind.

5. Bewegungseinheit nach einem der vorhergehenden Ansprüche, **dadurch gekennzeichnet, dass** die betreffenden Führungseinheiten (221) miteinander überlappend relativ zueinander justiert gehalten sind.

6. Bewegungseinheit nach einem der vorhergehenden Ansprüche, **dadurch gekennzeichnet, dass** die betreffenden Führungseinheiten (10, 21, 221) quer zu ihrer Bewegungsrichtung durch in dieser Richtung im Wesentlichen spielfreie Lagerung an der Tragstruktur (8, 3) mittels dieser relativ zueinander justiert gehalten sind.

7. Bewegungseinheit nach einem der vorhergehenden Ansprüche, **dadurch gekennzeichnet, dass** die mit den Verzahnungsabschnitten (15, 22, 222) der Zahnstange (16, 23, 223) versehenen Führungseinheiten (10, 21, 221) an einer der Tragstruktur (8, 3) gegenüberliegenden Innenseite an der Tragstruktur (8, 3) gelagert abgestützt sind und dass die Verzahnungsabschnitte (15, 22, 222) an der der Innenseite der Abstützung gegenüberliegenden Außenseite der Führungseinheiten (10, 21, 221) an diesen vorgesehen, insbesondere vollständig angeformt sind.

8. Bewegungseinheit nach einem der vorhergehenden Ansprüche, **dadurch gekennzeichnet, dass** die Führungseinheiten (10, 21, 221) mit Verzahnungsabschnitten (15, 22, 222) untereinander gleichartig sind.

9. Bewegungseinheit nach einem der vorhergehenden Ansprüche in Form einer Vorschubeinrichtung, mittels derer wenigstens ein Werkstück (13) und/oder wenigstens ein Bearbeitungswerkzeug (14) in Richtung zumindest einer Bewegungsachse (9, 19) relativ zu einer Bearbeitungsstation bewegbar ist, wobei die Vorschubeinrichtung wenigstens eine Bewegungsführung (6, 7) umfasst, deren mit den Verzahnungsabschnitten (15, 22, 222) der Zahnstange (16, 23, 223) versehene Führungseinheiten (10, 21, 221) an der zugeordneten Tragstruktur (8, 3) in Richtung einer Bewegungsachse (9, 19) geführt und mit dem oder den Werkstücken (13) und/oder dem oder den Bearbeitungswerkzeugen (14) bewegungsverbunden sind.

10. Bewegungseinheit nach einem der vorhergehenden Ansprüche, **dadurch gekennzeichnet, dass** die Vorschubeinrichtung als Koordinatenführung (5) ausgebildet ist, mittels derer wenigstens ein Werkstück (13) und/oder wenigstens ein Bearbeitungswerkzeug (14) in Richtung zweier Bewegungsachsen (9, 19) relativ zu einer Bearbeitungsstation bewegbar ist und die als Bewegungsführungen zwei Richtungsführungen (6, 7) aufweist, wobei das oder die Werkstücke (13) und/oder das oder die Bearbeitungswerkzeuge (14) mittels der ersten Richtungsführung (6) in Richtung der ersten Bewegungsachse (9) und mittels der zweiten Richtungsführung (7) gemeinschaftlich mit der ersten Richtungsführung (6) in Richtung der zweiten Bewegungsachse (19) bewegbar sind und wobei wenigstens eine der Richtungsführungen (6, 7) Führungseinheiten (10, 21, 221) umfasst, die Verzahnungsabschnitte (15, 22, 222) der Zahnstange (16, 23, 223) aufweisen und die mit dem oder den Werkstücken (13) und/oder dem oder den Bearbeitungswerkzeugen (14) bzw. mit der ersten Richtungsführung (6) und dem oder den Werkstücken (13) und/oder dem oder den Bearbeitungswerkzeugen (14) bewegungsverbunden sind.

11. Werkzeugmaschine mit einer Bewegungseinheit nach einem der vorhergehenden Ansprüche.

## Claims

1. Motion unit on machine tools, with at least one drive (18, 25) and at least one motion guide (6, 7) associated with the drive (18, 25), wherein the drive (18, 25) comprises at least one rack (16, 23, 223) and at least one drive pinion (17, 24) meshing with the latter, and the motion guide (6, 7) comprises at least one bearing structure (8, 3) and a plurality of guide units (10, 21, 221) which are guided at the bearing structure (8, 3) and can move together by means of the drive (18, 25), **characterised in that** the rack (16, 23, 223) comprises tooth portions (15, 22, 222), at least a part of which is formed at least at some of the guide units (10, 21, 221) in one piece with the latter, and that the guide units (10, 21, 221) concerned are held adjusted relative to one another in order to form the rack (16, 23, 223).

2. Motion unit according to Claim 1, **characterised in that** the tooth portions (15, 22, 222) are completely formed on the guide units (10, 21, 221) concerned.

3. Motion unit according to any one of the preceding Claims, **characterised in that** the guide units (10, 21) concerned are held adjusted relative to one another by means of at least one tie rod (26, 27) which passes through them in their direction of motion (9, 19).

4. Motion unit according to any one of the preceding Claims, **characterised in that** the guide units (10, 21) concerned are held adjusted relative to one another by means of at least one connecting strip (28, 29) which is fixed to them so as to rest externally thereon.

5. Motion unit according to any one of the preceding Claims, **characterised in that** the guide units (221) concerned are held in overlapping fashion adjusted relative to one another.

6. Motion unit according to any one of the preceding Claims, **characterized in that** the guide units (10, 21, 221) concerned are held by the bearing structure (8, 3) adjusted relative to one another transversely to their direction of motion by means of being supported by the bearing structure (8, 3) in a way substantially free from play in said direction.

7. Motion unit according to any one of the preceding Claims, **characterised in that** the guide units (10, 21, 221) provided with the tooth portions (15, 22, 222) of the rack (16, 23, 223) are supported at an inner side lying opposite the bearing structure (8, 3), at which bearing structure (8, 3) they are mounted, and that the tooth portions (15, 22, 222) are provided at, in particular completely formed on, the guide units (10, 21, 221) at the outer side thereof lying opposite the inner side of the support.

8. Motion unit according to any one of the preceding Claims, **characterised in that** the guide units (10, 21, 221) with tooth portions (15, 22, 222) are identical with one another.

9. Motion unit according to any one of the preceding Claims in the form of a feed device by means of which at least one workpiece (13) and/or at least one machining tool (14) can move in the direction of at least one motion axis (9, 19) relative to a machining station, wherein the feed device comprises at least one motion guide (6, 7) whose guide units (10, 21, 221) provided with the tooth portions (15, 22, 222) of the rack (16, 23, 223) are guided at the associated bearing structure (8, 3) in the direction of a motion axis (9, 19) and are connected for motion to the workpiece(s) (13) and/or the machining tool(s) (14).

10. Motion unit according to any one of the preceding Claims, **characterised in that** the feed device is formed as a coordinate guide (5) by means of which at least one workpiece (13) and/or at least one machining tool (14) can move in the direction of two motion axes (9, 19) relative to a machining station and which has two directional guides (6, 7) as motion guides, wherein the workpiece(s) (13) and/or the machining tool(s) (14) can move by means of the first directional guide (6) in the direction of the first motion axis (9) and by means of the second directional guide (7) together with the first directional guide (6) in the direction of the second motion axis (19), and wherein at least one of the directional guides (6, 7) comprises guide units (10, 21, 221) which have tooth portions (15, 22, 222) of the rack (16, 23, 223) and which are connected for motion to the workpiece(s) (13) and/or the machining tool(s) (14) or to the first directional guide (6) and the workpiece(s) (13) and/or the machining tool(s) (14).

11. Machine tool with a motion unit according to any one of the preceding Claims.

## Revendications

1. Unité de déplacement équipant des machines-outils, comprenant au moins un entraînement (18, 25), ainsi qu'au moins un système (6, 7) de guidage de mouvements associé audit entraînement (18, 25), ledit entraînement (18, 25) englobant au moins une crémaillère (16, 23, 223), ainsi qu'au moins un pignon menant (17, 24) engrenant dans cette dernière, et le système (6, 7) de guidage de mouvements incluant au moins une structure de support (8, 3), ainsi qu'une pluralité d'unités de guidage (10, 21, 221) qui sont guidées sur la structure de support (8, 3) et peuvent être animées de mouvements conjoints, au moyen de l'entraînement (18, 25), **caractérisée par le fait que** la crémaillère (16, 23, 223) est composée de segments dentés (15, 22, 222) dont au moins une partie est réalisée d'un seul tenant avec au moins une partie des unités de guidage (10, 21, 221), et **par le fait que** les unités de guidage considérées (10, 21, 221) sont maintenues avec ajustement relatif, en vue de former la crémaillère (16, 23, 223).

2. Unité de déplacement selon la revendication 1, **caractérisée par le fait que** les segments dentés (15, 22, 222) font totalement corps avec les unités de guidage considérées (10, 21, 221).

3. Unité de déplacement selon l'une des revendications précédentes, **caractérisée par le fait que** les unités de guidage considérées (10, 21) sont maintenues avec ajustement relatif à l'aide d'au moins un tirant d'ancrage (26, 27) qui les traverse dans leur direction de mouvement (9, 19).

4. Unité de déplacement selon l'une des revendications précédentes, **caractérisée par le fait que** les unités de guidage considérées (10, 21) sont maintenues avec ajustement relatif à l'aide d'au moins une barrette de solidarisation (28, 29) reposant extérieurement sur lesdites unités.

5. Unité de déplacement selon l'une des revendications précédentes, **caractérisée par le fait que** les unités de guidage considérées (221) sont maintenues avec ajustement relatif en se chevauchant réciproquement.

6. Unité de déplacement selon l'une des revendications précédentes, **caractérisée par le fait que** les unités de guidage considérées (10, 21, 221) sont maintenues avec ajustement relatif sur la structure de support (8, 3), au moyen de cette dernière, transversalement par rapport à leur direction de mouvement et par un montage sensiblement exempt de jeu dans cette direction

7. Unité de déplacement selon l'une des revendications précédentes, **caractérisée par le fait que** les unités de guidage (10, 21, 221), pourvues des segments dentés (15, 22, 222) de la crémaillère (16, 23, 223), prennent appui sur la structure de support (8, 3) sur une face intérieure opposée à ladite structure de support (8, 3) ; et **par le fait que** lesdits segments dentés (15, 22, 222) sont prévus sur les unités de guidage avec lesquelles, en particulier, ils font totalement corps sur la face extérieure desdites unités de guidage (10, 21, 221) qui est opposée à la face intérieure de l'appui.

8. Unité de déplacement selon l'une des revendications précédentes, **caractérisée par le fait que** les unités de guidage (10, 21, 221) munies de segments dentés (15, 22, 222) sont mutuellement identiques.

9. Unité de déplacement selon l'une des revendications précédentes, revêtant la forme d'un dispositif d'avance au moyen duquel des mouvements peuvent être imprimés à au moins une pièce (13) à usiner et/ou à au moins un outil d'usinage (14), dans la direction d'au moins un axe de mouvement (9, 19) vis-à-vis d'un poste d'usinage, le dispositif d'avance comprenant au moins un système (6, 7) de guidage de mouvements dont les unités de guidage (10, 21, 221), pourvues des segments dentés (15, 22, 222) de la crémaillère (16, 23, 223), sont guidées sur la structure de support associée (8, 3), dans la direction d'un axe de mouvement (9, 19), et sont en liaison motrice avec la ou les pièce(s) (13) à usiner et/ou avec l'(les) outil(s) d'usinage (14).

10. Unité de déplacement selon l'une des revendications précédentes, **caractérisée par le fait que** le dispositif d'avance est réalisé en tant que système (5) de guidage par coordonnées au moyen duquel des mouvements peuvent être imprimés à au moins une pièce (13) à usiner et/ou à au moins un outil d'usinage (14), dans la direction de deux axes de mouvement (9, 19) vis-à-vis d'un poste d'usinage, et est équipé de deux guides directionnels (6, 7) en tant que systèmes de guidage de mouvements, sachant que la ou les pièce(s) (13) à usiner et/ou l'(les) outil(s) (14) d'usinage peuvent être animé(e)s de mouvements dans la direction du premier axe de mouvement (9), au moyen du premier guide directionnel (6), et dans la direction du second axe de mouvement (19) au moyen du second guide directionnel (7), conjointement audit premier guide directionnel (6) ; et sachant qu'au moins l'un des guides directionnels (6, 7) comporte des unités de guidage (10, 21, 221) qui présentent les segments dentés (15, 22, 222) de la crémaillère (16, 23, 223) et sont en liaison motrice avec la ou les pièce(s) (13) à usiner et/ou avec l'(les) outil(s) (14) d'usinage, respectivement avec le premier guide directionnel (6) et la ou les pièce(s) (13) à usiner et/ou l'(les) outil(s) (14) d'usinage.

11. Machine-outil équipée d'une unité de déplacement selon l'une des revendications précédentes.
